# EUROPÄISCHE PATENTSCHRIFT

(11) **EP 2 175 341 B1**
(45) Veröffentlichungstag und Bekanntmachung des Hinweises auf die Patenterteilung: **06.08.2014**
(21) Anmeldenummer: 09168368.0
(22) Anmeldetag: 21.08.2009
(51) Int. Cl.: G05D 23/02, B01D 35/00, H01R 13/40, F01P 7/00

(54) **Thermostatventil**
Thermostatic valve
Vanne thermostatique

(30) Priorität: 10.10.2008 DE 102008051267
(43) Veröffentlichungstag der Anmeldung: 14.04.2010
(73) Patentinhaber: Mahle International GmbH, 70376 Stuttgart (DE)
(72) Erfinder: Widmaier, Andreas, 71083 Herrenberg (DE)
(74) Vertreter: BRP Renaud & Partner

(56) Entgegenhaltungen:
- WO-A1-2006/131140
- GB-A- 2 390 234
- US-A- 4 364 621
- US-A1- 2006 065 218
- US-A1- 2006 113 399

## Beschreibung

Die vorliegende Erfindung betrifft ein Thermostatventil, insbesondere für einen Kühl- oder Ölkreislauf bei einem Verbrennungsmotor in einem Kraftfahrzeug, gemäß dem Oberbegriff des Anspruchs 1.

Aus der EP 1 205 833 B1 ist ein gattungsgemäßes Thermostatventil bekannt, welches elektrische Verbindungsleitungen innerhalb eines Gehäuses des Thermostatventils aufweist. Das Gehäuse besteht dabei zumindest teilweise aus einem Kunststoffmaterial, wobei die elektrischen Verbindungsleitungen in dieses Kunststoffmaterial des Gehäuses eingebettet sind. Darüber hinaus weisen beide Enden der Verbindungsleitungen in das Kunststoffmaterial des Gehäuses eingebettete elektrische Verbinder auf. Hierdurch soll ein bezüglich seiner Herstellbarkeit vereinfachter und bezüglich seiner Funktionssicherheit verbesserter elektrischer Kontakt gewährleistet werden.

Aus der DE 34 86 345 T2 ist eine thermische Regeleinrichtung bekannt, die in einer Rohrleitung angeordnet ist und ein hohles, eine Kammer bildendes Gehäuse aufweist. Dabei soll mit der vorliegenden thermischen Regeleinrichtung eine erleichterte Überwachung eines Dehnverhaltens eines innerhalb des Gehäuses angeordneten Dehnstoffes vereinfacht und verbessert werden.

Das Dokument US 2006/0113399 A1 zeigt ebenfalls einen relevanten Stand der Technik.

Die vorliegende Erfindung beschäftigt sich mit dem Problem, für ein gattungsgemäßes Thermostatventil, eine verbesserte oder zumindest eine andere Ausführungsform anzugeben, die eine vereinfachte, gleichzeitig aber effiziente Kopplung eines Thermostatelementes eines Thermostatventils mit einer elektrischen Anschlussleitung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, in einem Gehäuse eines Thermostatventils eine Durchgangsöffnung vorzusehen und in dieser Durchgangsöffnung eine elektrische Steckverbindung anzuordnen, über welche ein innerhalb des Gehäuses liegendes Thermostatelement mit einer außerhalb des Gehäuse liegenden elektrischen Anschlussleitung elektrisch verbunden werden kann. Hierdurch lässt sich insbesondere das Gehäuse im Vergleich zum Stand der Technik deutlich einfacher herstellen, da nunmehr nur noch eine gewöhnliche Durchgangsöffnung vorgesehen werden muss und nicht wie aus dem Stand der Technik bekannt, entsprechende elektrische Kontaktierungselemente bereits in das Gehäuse mit eingespritzt werden müssen. Durch die erfindungsgemäße Steckverbindung, welche innerhalb der Durchgangsöffnung angeordnet ist, kann darüber hinaus eine einfache Montage bzw. Demontage der elektrischen und außenliegenden Anschlussleitung bewirkt werden. Von besonderem Vorteil ist jedoch, dass in dem Gehäuse des erfindungsgemäßen Thermostatventils lediglich eine einfache Durchgangsöffnung vorgesehen werden muss, was im Vergleich zu den eingespritzten Kontaktierungselementen eine deutliche Kostenreduzierung bei der Herstellung des Gehäuses bewirkt. Die separat herzustellende Steckverbindung zwischen dem innerhalb des Gehäuses liegenden Thermostatelementes und der außerhalb des Gehäuses liegenden elektrischen Anschlussleitung, kann dabei als konstruktiv einfache, insbesondere leicht abzudichtende, Steckverbindung kostengünstig ausgeführt werden.

Bei einer vorteilhaften Weiterbildung der erfindungsgemäßen Lösung, ist das Gehäuse integraler Bestandteil eines Ölfiltergehäuses. In diesem Fall befindet sich die Durchgangsöffnung im Ölfiltergehäuse, so dass die elektrische Steckverbindung zur elektrischen Kontaktierung des innenliegenden Thermostatventils mit der außenliegenden elektrischen Anschlussleitung in der Durchgangsöffnung des Ölfiltergehäuses angeordnet ist. Das Thermostatventil überwacht dabei üblicherweise die Temperatur eines Kühlmediums zur Kühlung des Ölfilters oder eine Öltemperatur. Selbstverständlich kann eine derartige Durchgangsöffnung auch bei weiteren, nicht explizit genannten, Gehäusen vorgesehen werden, bei welchen eine elektrische Kontaktierung eines innerhalb des Gehäuses gelegenen elektrischen Elementes mit einer außerhalb des Gehäuses gelegenen elektrischen Anschlussleitung erfolgen soll.

Bei einer weiteren vorteilhaften Ausführungsform der erfindungsgemäßen Lösung, weisen zumindest ein am Thermostatelement angeordneter Stecker, vorzugsweise jedoch auch eine an der Anschlussleitung angeordnete Kupplung, ein Rastelement auf, welches im Bereich der Durchgangsöffnung mit einem am Gehäuse angeordneten Gegenrastelement zusammenwirken. Hierdurch ist es möglich, sowohl das Thermostatelement als auch die Anschlussleitung über den entsprechenden Stecker bzw. die zugehörige Kupplung separat am Gehäuse zu fixieren und dadurch festzulegen. Es ist somit denkbar, dass das Gehäuse mit dem innenliegenden Thermostatelement bereits vorgefertigt, das heißt geschlossen an ein Montageband angeliefert wird und zur Endmontage lediglich noch die an der Anschlussleitung angeordnete Kupplung in die Durchgangsöffnung eingedrückt werden muss, um die elektrische Kontaktierung zwischen dem Thermostatelement und der Anschlussleitung herzustellen. Dabei ist es selbstverständlich, dass der Stecker wahlweise am Thermostatelement bzw. an der elektrischen Anschlussleitung angeordnet sein kann, ebenso wie die wahlweise Anordnung der zugehörigen Kupplung am Thermostatelement bzw. an der Anschlussleitung.

Alternativ zu dieser Ausführungsform kann auch vorgesehen sein, dass der Stecker ein Rastelement aufweist, welches mit einem an der Kupplung angeordneten Gegenrastelement zusammenwirkt. Hierdurch kann ein elektrischer Kontakt zwischen dem Thermostatelement und der Anschlussleitung zuverlässig gewährleistet werden, da das Thermostatelement vorzugsweise bei noch geöffnetem Gehäuse über seinen Stecker mit der Kupplung der elektrischen Anschlussleitung verrastet werden muss. Denkbar ist hierbei auch, dass die miteinander verrastete Steckverbindung sowohl das Thermostatelement als auch die Kupplung der Anschlussleitung in ihrer Einbaulage zuverlässig fixieren.

Bei einer vorteilhaften Weiterbildung der erfindungsgemäßen Lösung, ist im Bereich der Durchgangsöffnung zumindest eine O-Ringdichtung zur Abdichtung der Steckverbindung gegenüber dem Gehäuse, das heißt insbesondere gegenüber einem Innenrand der Durchgangsöffnung, vorgesehen. Derartige O-Ringdichtungen sind einerseits kostengünstig herzustellen und besitzen andererseits ein hohes Dichtvermögen, so dass eine wirkungsvolle Abdichtung mit vergleichsweise geringen Kosten erzielbar ist. Die O-Ringdichtung kann dabei beispielsweise in einer am Stecker bzw. an der Kupplung oder an einer Innenwandung der Durchgangsöffnung eingelassenen Ringnut angeordnet sein, so dass diese bis zum Erreichen der Einbaulage selbsttätig in Position gehalten wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

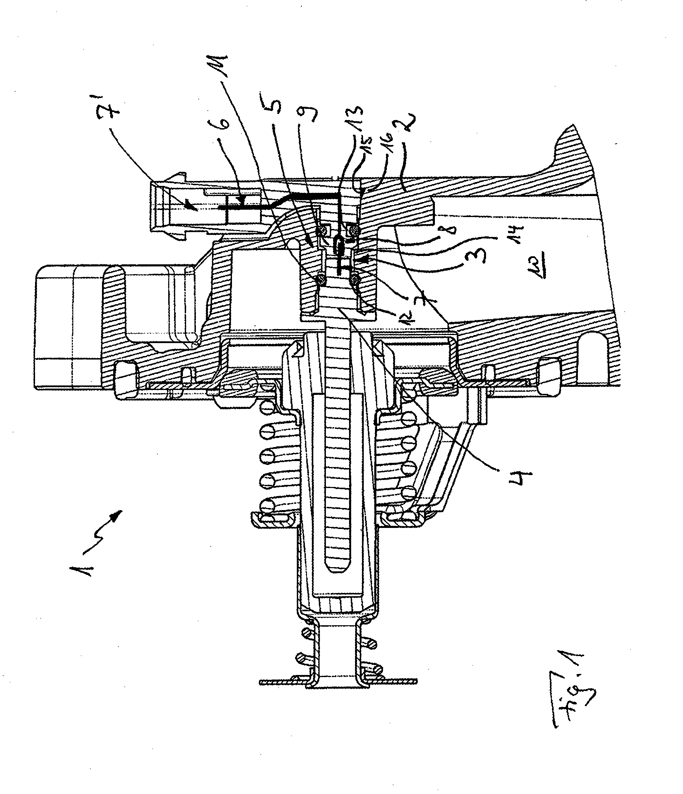

Die einzige Fig. 1 zeigt eine Schnittdarstellung durch ein Gehäuse im Bereich der erfindungsgemäßen Durchgangsöffnung.

Entsprechend der Fig. 1, weist ein Thermostatventil 1 ein Gehäuse 2 mit einer Durchgangsöffnung 3 auf. Das Thermostatventil 1 kann dabei insbesondere die Temperatur eines Kühl- oder Ölkreislaufes bei einem Verbrennungsmotor in einem Kraftfahrzeug überwachen bzw. regeln. Hierzu weist es ein innerhalb des Gehäuses 2 liegendes Thermostatelement 4 auf, welches über eine innerhalb der Durchgangsöffnung 3 angeordnete elektrische Steckverbindung 5 mit einer außenliegenden elektrischen Anschlussleitung 6 elektrisch kontaktiert ist. Die Steckverbindung 5 umfasst dabei einen Stecker 7 sowie eine Kupplung 8, wobei im in Fig. 1 gezeichneten Fall der Stecker 7 am Thermostatelement 4 und die Kupplung 8 an der außenliegenden elektrischen Anschlussleitung 6 angeordnet sind. Sowohl der Stecker 7 als auch die Kupplung 8 sind dabei vorzugsweise in Kunststoff eingespritzt und bilden jeweils einen integralen Bestandteil des Thermostatelementes 4 bzw. eines, die Anschlussleitung 6 umgebenden Kopplungsbereiches 9. Die Kupplung 8 ist dabei gemäß der Fig. 1 als Winkeladapter ausgebildet und weist an seinem, der Kupplung 8 abgewandten Ende, einen Stecker 7' auf. Selbstverständlich kann dabei die Kupplung 8 als Adapter vorgesehen sein, welcher über den Stecker 7' mit einem elektrischen Bordnetz verbunden wird oder aber bereits mit einer durchgehenden Anschlussleitung 6 mit dem elektrischen Bordnetz verbunden ist.

Das Thermostatventil 1 kann bei einer bevorzugten Ausführungsform an einem Ölfilter angeordnet sein, wobei in diesem Fall das Gehäuse 2 integraler Bestandteil eines Ölfiltergehäuses ist. Somit befindet sich die Durchgangsöffnung 3 im Ölfiltergehäuse.

Um einen Austritt von Medium aus einem medienführenden Bereich 10 durch die Durchgangsöffnung 3 nach außen zu vermeiden, ist die Steckverbindung 5, vorzugsweise zumindest der Stecker 7, im Bereich der Durchgangsöffnung 3 abgedichtet. Bei der gemäß der Fig. 1 dargestellten Ausführungsform ist dabei sowohl der Stecker 7 als auch die Kupplung 8 über entsprechende O-Ringdichtungen 11 gegenüber der Durchgangsöffnung 3, das heißt gegenüber dem Gehäuse 2, abgedichtet. Die O-Ringdichtungen 11 können dabei an einer Stufe 12 des Steckers 7 anliegen oder aber in eine Radialnut 13 der Kupplung 8 eingelassen sein. Die Anordnung des Steckers 7 kann dabei wahlweise am Thermostatelement 4 bzw. an der Anschlussleitung 6 erfolgen, so dass auch eine gemäß der Fig. 1 umgekehrte Anordnung der Steckverbindung 5, bei welcher der Stecker 7 an der elektrischen Anschlussleitung 6 und die Kupplung 8 am Thermostatelement 4 angeordnet sind, von der Erfindung mitumfasst sein sollen.

Um die Steckverbindung 5 zuverlässig fixieren zu können, kann im Bereich der Durchgangsöffnung 3 eine Radialstufe 14 vorgesehen sein, die als Anschlag für den Stecker 7 und die Kupplung 8 dient. Hierdurch wird das Erreichen einer Einbaulage durch das Anliegen des Steckers 7 bzw. der Kupplung 8 an der Radialstufe 14 haptisch angezeigt.

Zur Fixierung der Steckverbindung 5, können der Stecker 7 und/oder die Kupplung 8 ein Rastelement 15 aufweisen, welches gemäß der Fig. 1 lediglich an der Kupplung 8 gezeichnet ist, und welches im Bereich der Durchgangsöffnung 3 mit einem am Gehäuse 2 angeordneten Gegenrastelement 16, beispielsweise einem Hinterschnitt, zusammenwirkt. Denkbar ist selbstverständlich auch, dass der Stecker 7 ein Rastelement aufweist, welches mit einem an der Kupplung 8 angeordneten Gegenrastelement zusammenwirkt und dadurch eine zugfeste Verbindung zwischen dem Stecker 7 und der Kupplung 8 erzeugt.

Mit dem erfindungsgemäßen Thermostatventil 1 insbesondere bei einem Einsatz in einem Ölfiltergehäuse die elektrische Kontaktierung zwischen dem Thermostatelement 4 und der elektrischen Anschlussleitung 6 deutlich vereinfacht werden, da im Gehäuse 2, insbesondere im Ölfiltergehäuse, lediglich eine kostengünstige und konstruktiv einfach herzustellende Durchgangsöffnung 3 vorzusehen ist, in welcher nach einer entsprechenden Montage die Steckverbindung 5 angeordnet ist. Ein aufwändiges und dadurch teures Einspritzen von in das Gehäuse integrierten elektrischen Kontaktelementen, wie dies beispielsweise aus dem Stand der Technik bekannt ist, kann dadurch wirkungsvoll vermieden werden. Selbstverständlich ist dabei denkbar, dass eine derartige elektrische Steckverbindung 5 auch in anderen Gehäusen zum Einsatz kommt, bei welchen ein innerhalb des Gehäuses 2 liegender elektrischer Verbraucher mit einer außerhalb des Gehäuses 2 liegenden elektrischen Anschlussleitung verbunden werden soll.

## Patentansprüche

1. Thermostatventil (1), insbesondere für einen Kühl- oder Ölkreislauf bei einem Verbrennungsmotor in einem Kraftfahrzeug, mit einem Gehäuse (2),
**dadurch gekennzeichnet,**
- **dass** das Gehäuse (2) eine Durchgangsöffnung (3) aufweist, in welcher nach einer entsprechenden Montage eine elektrische Steckverbindung (5) zur elektrischen Kontaktierung eines innen liegenden Thermostatelements (4) mit einer außen liegenden elektrischen Anschlussleitung (6) angeordnet ist,
- **dass** das Thermostatelement (4) einen, insbesondere in Kunststoff eingespritzten, Stecker (7) und die Anschlussleitung (6) eine, insbesondere in Kunststoff eingespritzte, Kupplung (8) aufweisen, oder umgekehrt, die zusammen die Steckverbindung (5) bilden,
- **dass** im Bereich der Durchgangsöffnung (3) eine Radialstufe (14) vorgesehen ist, die als Anschlag für den Stecker (7) und/oder die Kupplung (8) dient.

2. Thermostatventil nach Anspruch 1,
**dadurch gekennzeichnet,**
**dass** das Gehäuse (2) integraler Bestandteil eines Ölfiltergehäuses ist.

3. Thermostatventil nach Anspruch 1 oder 2,
**dadurch gekennzeichnet,**
**dass** zumindest der Stecker (7), vorzugsweise auch die Kupplung (8), im Bereich der Durchgangsöffnung (3) abgedichtet sind.

4. Thermostatventil nach einem der Ansprüche 1 bis 3,
**dadurch gekennzeichnet,**
**dass** im Bereich der Durchgangsöffnung (3) zumindest eine O-Ring Dichtung (11) zur Abdichtung der Steckverbindung (5) gegenüber dem Gehäuse (2) vorgesehen ist.

5. Thermostatventil nach einem der Ansprüche 1 bis 4,
**dadurch gekennzeichnet,**
**dass** zumindest der Stecker (7), vorzugsweise auch die Kupplung (8), ein Rastelement (15) aufweisen, welches im Bereich der Durchgangsöffnung (3) mit einem am Gehäuse (2) angeordneten Gegenrastelement (16) zusammenwirken.

6. Thermostatventil nach einem der Ansprüche 1 bis 4,
**dadurch gekennzeichnet,**
**dass** der Stecker (7) ein Rastelement aufweist, welches mit einem an der Kupplung (8) angeordneten Gegenrastelement zusammenwirkt.

7. Ölfilter mit einem Thermostatventil (1) nach einem der vorhergehenden Ansprüche, wobei die Durchgangsöffnung (3) in ein Ölfiltergehäuse integriert ist.

## Claims

1. A thermostat valve (1), in particular for a cooling or oil circuit for an internal combustion engine in a motor vehicle, having a housing (2),
**characterised in that**
- the housing (2) has a through-opening (3), in which, after corresponding installation, an electrical plug connection (5) is arranged for electrical contact between an interior thermostat element (4) and an exterior electrical connection line (6),
- the thermostat element (4) has a connector (7), which is in particular injection-moulded in plastic, and the connection line (6) has a coupling (8), which is in particular injection-moulded in plastic, or vice versa, which together form the plug connection (5),
- a radial step (14) is provided in the region of the through-opening (3), which acts as a stop for the connector (7) and/or the coupling (8).

2. The thermostat valve according to Claim 1,
**characterised in that**
the housing (2) is an integral component of an oil filter housing.

3. The thermostat valve according to Claim 1 or 2,
**characterised in that**
at least the connector (7), preferably also the coupling (8), are sealed off in the region of the through-opening (3).

4. The thermostat valve according to any one of Claims 1 to 3,
**characterised in that**
at least one O-ring seal (11) is provided in the region of the through-opening (3) to seal off the plug connection (5) from the housing (2).

5. The thermostat valve according to any one of Claims 1 to 4,
**characterised in that**
at least the connector (7), preferably also the coupling (8), have a latching element (15), which interacts in the region of the through-opening (3) with a counter latching element (16) arranged on the housing (2).

6. The thermostat valve according to any one of Claims 1 to 4,
**characterised in that**
the connector (7) has a latching element, which interacts with a counter latching element arranged on the coupling (8).

7. An oil filter having a thermostat valve (1) according to any one of the preceding claims, wherein the through-opening (3) is integrated in an oil filter housing.

## Revendications

1. Soupape de thermostat (1), notamment pour un circuit de refroidissement ou d'huile sur un moteur à combustion interne dans un véhicule automobile, comportant un logement (2),
**caractérisée en ce que**
- le logement (2) présente une ouverture traversante (3), dans laquelle après un montage correspondant une liaison par enfichage électrique (5) à des fins de contact électrique d'un élément de thermostat (4) situé à l'intérieur avec une ligne de branchement électrique (6) située à l'extérieur est disposée,
- l'élément de thermostat (4) présente un connecteur (7) moulé par injection, notamment en plastique et la ligne de branchement (6) présente un couplage (8) moulé par injection, notamment en plastique, ou inversement, qui forment conjointement la liaison par enfichage (5),
- au niveau de l'ouverture traversante (3) un gradin radial (14) est prévu, qui sert de butée pour le connecteur (7) et/ou le couplage (8).

2. Soupape de thermostat selon la revendication 1,
**caractérisée en ce que**
le logement (2) est partie intégrante d'un logement de filtre à huile.

3. Soupape de thermostat selon la revendication 1 ou 2, **caractérisée en ce que**
au moins le connecteur (7), de préférence aussi le couplage (8) sont isolés de manière étanche au niveau de l'ouverture traversante (3).

4. Soupape de thermostat selon une des revendications 1 à 3,
**caractérisée en ce que**
au niveau de l'ouverture traversante (3) au moins un joint torique d'étanchéité (11) est prévu afin d'isoler de manière étanche la liaison d'enfichage (5) par rapport au logement (2).

5. Soupape de thermostat selon une des revendications 1 à 4,
**caractérisée en ce que**
au moins le connecteur (7), de préférence aussi le couplage (8) présentent un élément d'encliquetage (15), qui coopèrent au niveau de l'ouverture traversante (3) avec un élément de contre-cliquet (16) disposé sur le logement (2).

6. Soupape de thermostat selon une des revendications 1 à 4,
**caractérisée en ce que**
le connecteur (7) présente un élément d'encliquetage, qui coopère avec un élément de contre-cliquet disposé sur le couplage (8).

7. Filtre à huile comportant une soupape de thermostat (1) selon une des revendications précédentes, dans lequel l'ouverture traversante (3) est intégrée dans un logement de filtre à huile.
